# NEW EUROPEAN PATENT SPECIFICATION

(11) **EP 1 747 115 B2**
(45) Date of publication and mention of the opposition decision: **15.08.2012**
(45) Mention of the grant of the patent: 31.12.2008
(21) Application number: 05740479.0
(22) Date of filing: 06.05.2005
(51) Int. Cl.: B60N 2/28

(54) **BASE FOR A CHILD SAFETY SUPPORT**
BASIS FÜR EINE KINDERSICHERHEITSSTÜTZE
SOCLE POUR DISPOSITIF DE RETENUE POUR ENFANTS

(30) Priority: 08.05.2004 GB 0410303
(43) Date of publication of application: 31.01.2007
(73) Proprietor: Britax Excelsior Limited, Hampshire SP10 3UW (GB)
(72) Inventor: POWELL, Iain, Andover, Hampshire SP10 3UW (GB)
(74) Representative: Bosch, Matthias
(86) International application number: PCT/GB2005/001732
(87) International publication number: WO 2005/108155

(56) References cited:
- EP-A- 0 822 115
- EP-A- 1 279 554
- EP-A1- 0 693 393
- EP-A2- 0 822 115
- EP-A2- 0 967 113
- EP-B1- 1 369 294
- EP-B2- 1 090 804
- WO-A-2004/002773
- DE-C1- 4 137 575
- NL-C1- 1 000 752
- US-A- 5 567 008
- US-A- 5 567 008
- US-A- 5 816 651
- US-B1- 6 199 949

## Description

The present invention relates to a base for a child safety support and in particular to a base for a child safety support to be used in a vehicle with an adult seat equipped with ISOFIX loops.

In this specification, the term "child safety support" is used to encompass both child safety seats and infant carriers, which are provided with a harness for securing the child in the support in case of an accident. The term child safety support is used because in a seat a child is more upright than lying and in an infant carrier the child can be more lying than sitting, and thus the term child safety support encompasses the full range of child posture from the most upright seat to the most recumbent infant carrier.

In this specification, the term "child safety support" includes both rearwards facing infant carriers, rearwards facing Group 1 children's seats and forwards facing Group 1 childrens' seats at least, all being adapted for accident-secure attachment to a base to be secured in a vehicle. The child safety seats can in addition be adapted to be secured in a vehicle via an adult safety belt.

A base for a seat is convenient in allowing a single fitting to the car to be used for at least two sizes of child safety support, namely a Group 0+ infant carrier and a Group 1 rear facing seat such as are necessary as children grow.

For youngest children, i.e. infants, a forwards facing seat is not acceptable. An infant carrier is fitted in the car facing backwards. In some countries, this practice is continued for pre-school age children. In terms of groupings used in the industry, the former are Group 0+ children and the latter are Group 1 children.

ISOFIX is a system for fixing child safety seats in vehicles. It is established under UNECE Regulation 44.03. Essentially it provides for a pair of steel loops in an adult seat at the junction between the back and the cushion of the seat, the child safety seat being able to be latched onto the loops.

ISOFIX seats can suffer from excessive forwards movement in pivoting about the latch loops, if not provided with a top tether, i.e. a tether for the back of the seat acting at its top.

It is known from European Patent Application No. 1,279,554 to provide a seat base to be secured in the adult seat by means of its adult seat belt with a foot prop for supporting the front of the seat base.

WO 2004/002773 discloses a fastening frame for fastening a child seat in motor vehicles that are provided with child seat anchoring elements that are joined in a fixed manner to the vehicle. The fastening frame comprises a fastening section, with anchoring elements connected to one end of the fastening section for detachably anchoring the fastening frame to the child seat anchoring elements. A supporting section is connected to the other end of the fastening frame and is supported in front of the vehicle seat on the vehicle floor or on vehicle body parts. A child seat can then be detachably anchored to the fastening frame.

The object of the present invention is to provide an improved base for a child safety support.

According to an aspect of the present invention, there is provided a base for a child safety support for use in a vehicle with an adult seat equipped with ISOFIX loops, the base comprising: a body configured for positioning on the cushion of an adult seat; a pair of ISOFIX latches attached to the rear of the body; a foot prop attached at or near the front of the body for extending past the front edge of the cushion of the adult seat and for abutting the floor of the vehicle; a safety support engagement mechanism for engaging a child safety support to the body; and characterised in that the base further comprises an anti-rebound member provided at the latch end of the body for abutting against the back of the adult seat to resist rebound rotation of the body about the ISOFIX latches in the event of an accident, wherein the body includes a reinforcement connecting the ISOFIX latches to the safety support engagement mechanism, the ISOFIX latches being pivotally attached to the reinforcement.

Conveniently, the body is of unitary and/or moulded construction with sufficient inherent strength to resist accident loads.

Conveniently, the reinforcement is in the form of a U-shaped metal frame having the ISOFIX latches at the distal ends of its limbs.

Conveniently, the latches and limbs are connected directly.

Conveniently, the latches and limbs are connected via a cross-member interconnecting the distal ends, and having the latches at the terminal ends of the cross-member.

Conveniently, the latches are pivoted via the cross-member.

Conveniently, the anti-rebound member is attached to the cross-member.

Conveniently, the anti-rebound member is pivotal about the cross-member and is provided with abutments with the top surface of the base to limit the movement of the member and the top surface towards each other in a rebound.

Conveniently, the foot prop is attached at the front of the body.

Conveniently, the safety support engagement mechanism is configured as two pairs of hooks pivoted to the Ü-frame - two at each long limb - and ganged together for resilient urging to their engaged position.

Conveniently, a central longitudinal member is provided for the ganged connection.

Conveniently, the ganged connection is provided with an inertia interlock, releasable on application of manual force to release the engagement means.

According to a preferred embodiment of the present invention, a base is provided comprising a button moveable from an engaged position to a release position for releasing the child safety support from the safety support engagement mechanism, the button being provided with an indicator for indicating that the button is in an engaged position corresponding to the hooks being in their engagement position.

Conveniently, said indicator indicating that the button is in an engaged position corresponds to the hooks being in their engagement position.

Conveniently, the base further comprises a retainer for retaining the hooks in a disengaged position and the button in a release position without the indicator indicating engagement when no child safety support is engaged on the base.

Conveniently, the button is provided at the end of the central longitudinal member opposite from the ISOFIX latches.

Conveniently, the retainer is a pivoted arm arranged to abut one of the hooks in its disengaged and extend from a point of abutment in the direction of the line of movement of the hook towards its engaged position, a pivot for the arm being provided remote from the point of abutment in the direction of the arm's extension, whereby the resilient urging of the hook to its engaged position does not deflect the arm and a spring is provided for urging the arm to its hook retaining position, when displaced therefrom on engagement of a child safety support on the base.

Conveniently, the pivot is provided on a member attached to the inside of an upper skin of the body, the member and an extension of the arm from the pivot remote from the hook being provided with spring location points.

Conveniently, the base comprises mouldings formed from plastics materials.

Conveniently, said child safety support is a Group 0+ rear-facing infant carrier or forward-facing or a rear-facing Group 1 child safety seat.

According to a further aspect of the present invention, there is provided a base according to the first aspect of the present invention, in combination with an infant carrier or a child safety seat.

To help understanding of the invention, a specific embodiment thereof will now be described by way of example and with reference to the accompanying drawings, in which:

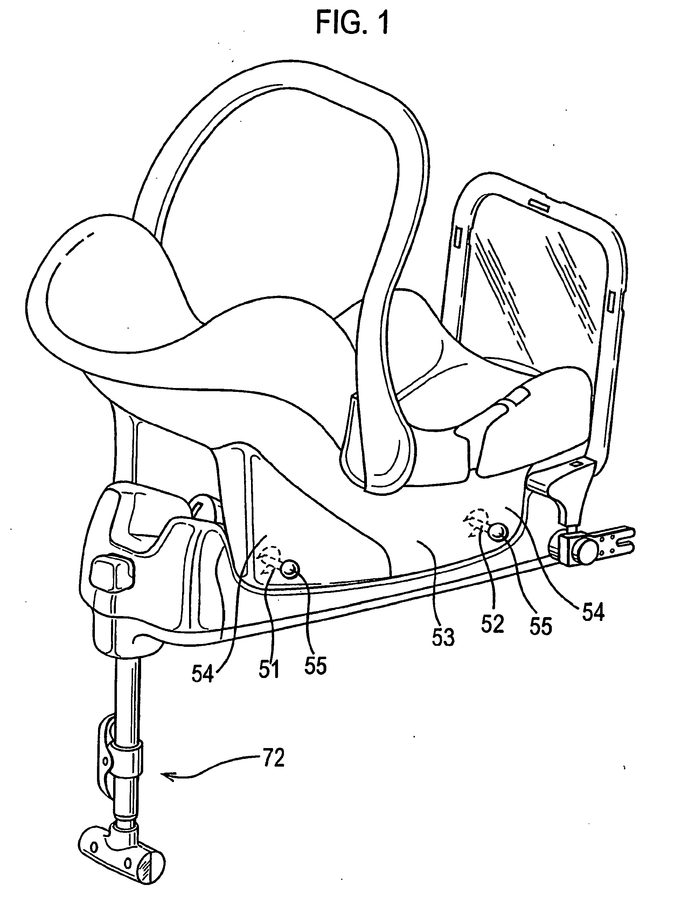

Figure 1 is a perspective view of a base for a child safety support in use with an infant carrier;

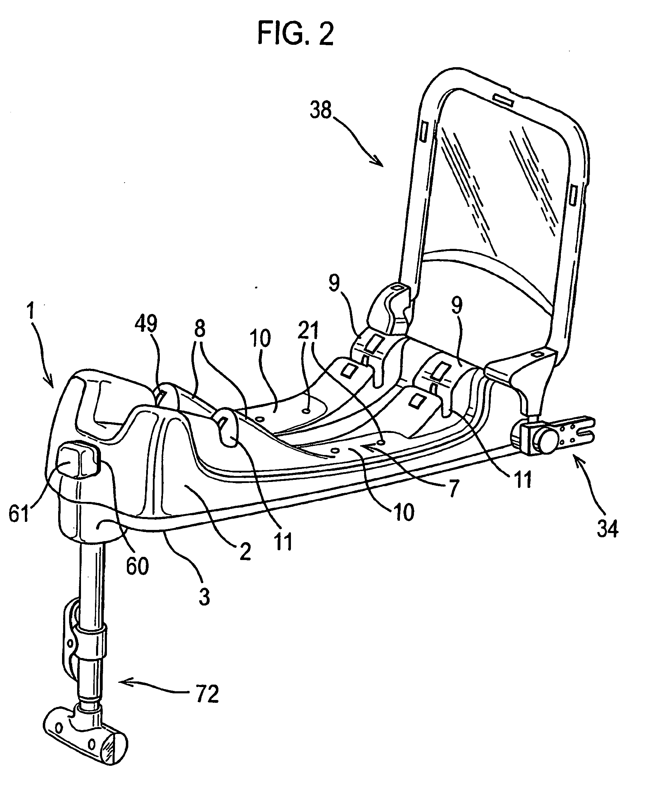

Figure 2 is a similar view with the carry cot removed;

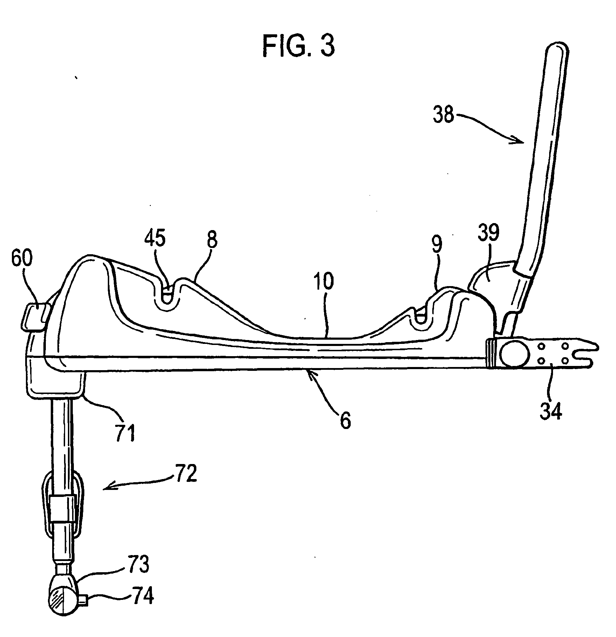

Figure 3 is a side view of the base in its use configuration;

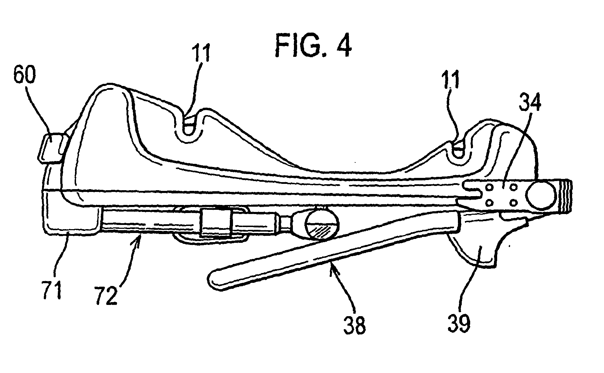

Figure 4 is a side view of the base in its stowed configuration;

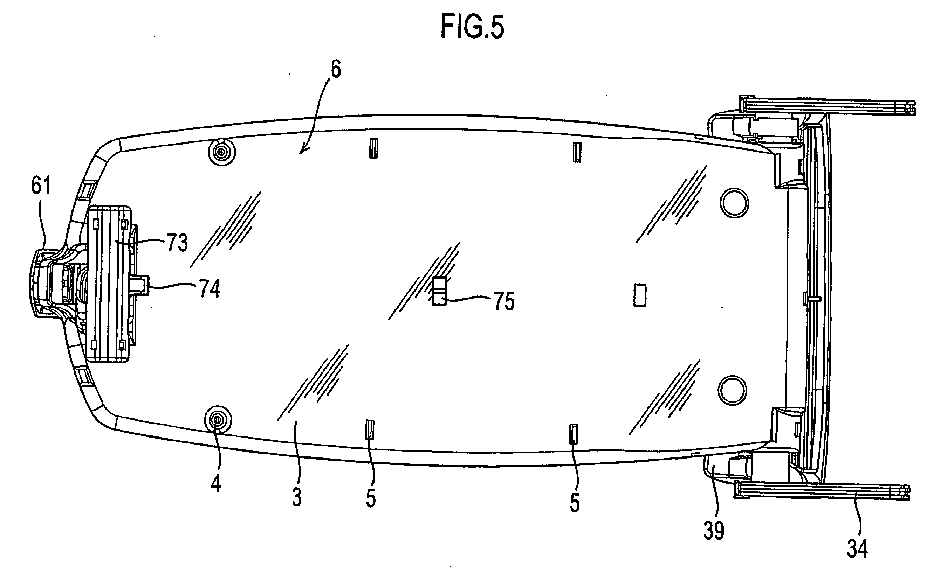

Figure 5 is an underneath view of the base;

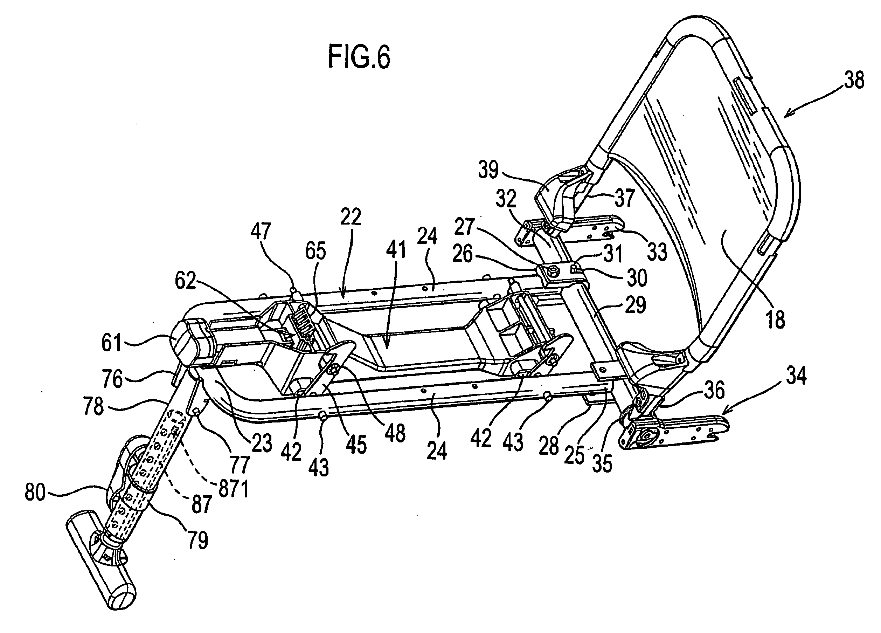

Figure 6 is an isometric view of the base with its outer mouldings removed;

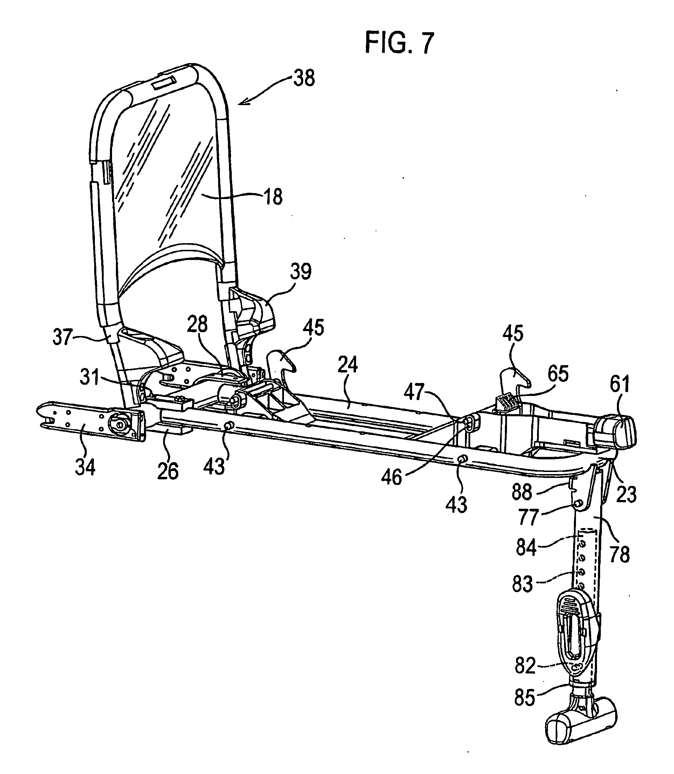

Figure 7 is a similar view the other side (NB. two hooks for securing the carry cot are omitted for clarity);

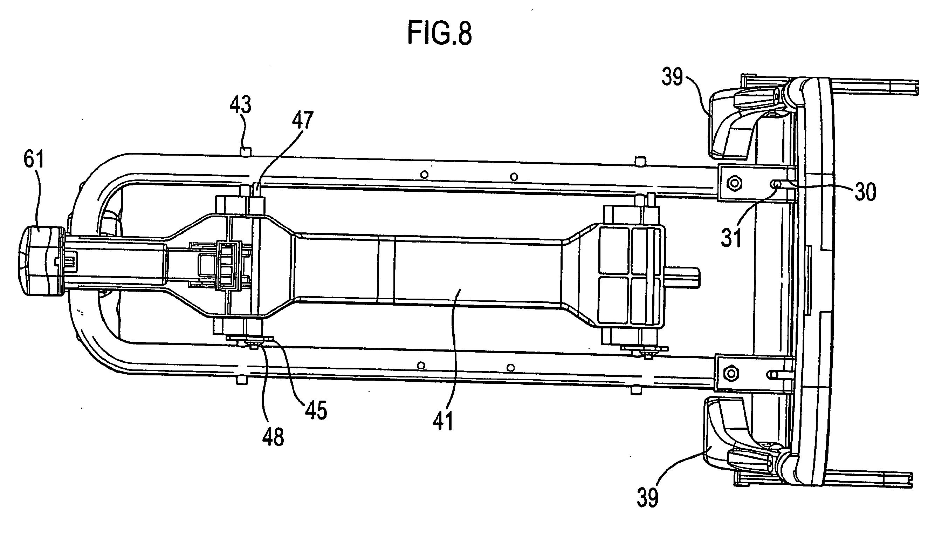

Figure 8 is a similar plan view;

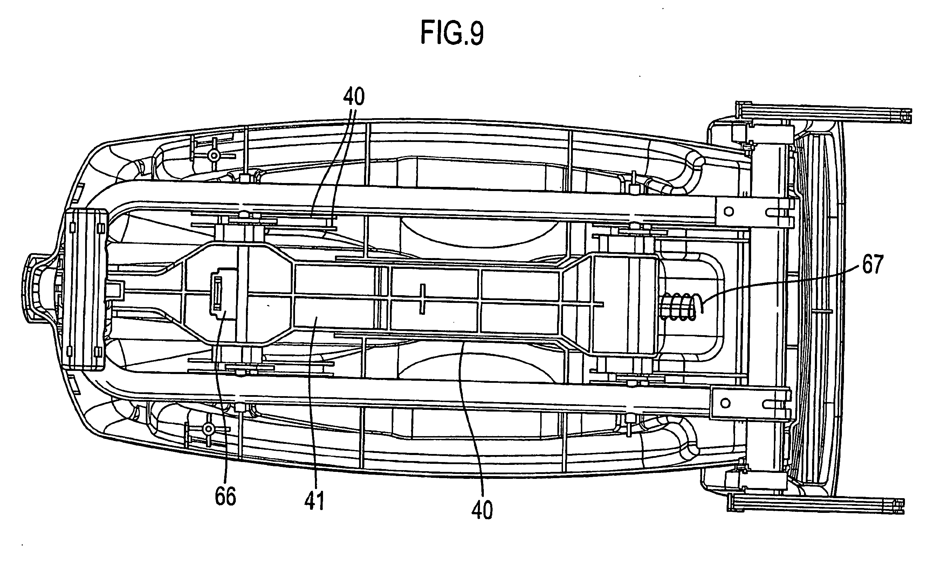

Figure 9 is an underneath view similar to Figure 5, but with the bottom moulding removed;

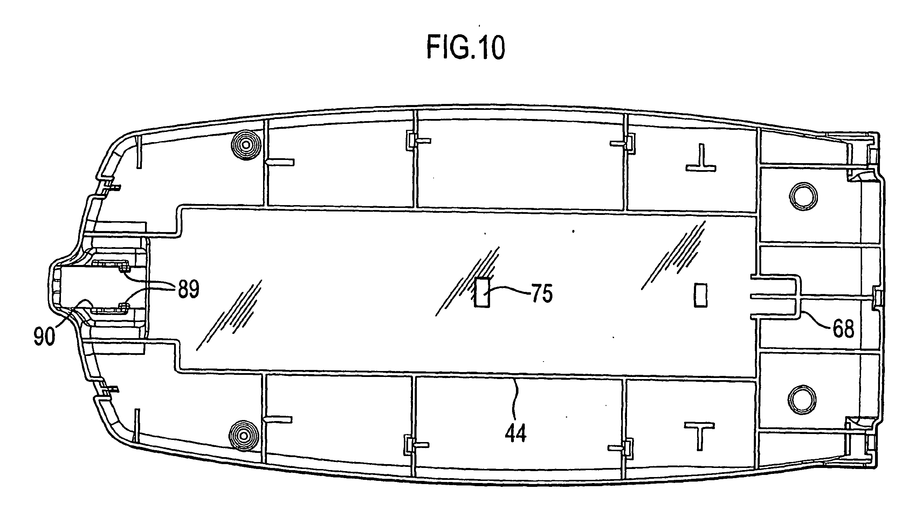

Figure 10 is a plan view of the bottom moulding; and
Figure 11 is a partially sectioned side view of the front end of the base, showing a hook retainer in a variant.

Referring to the drawings, the child safety support base 1 thereshown comprises an upper moulding 2 and a lower moulding 3 screwed 4 and clipped 5 together. Except for a formation at the front, the under-surface 6 of the lower moulding is flat. The top surface 7 of the upper moulding has a pair of front humps 8 and a pair of rear humps 9, with a lower flat 10 therebetween.

The humps have moulded recesses 11 for front and rear anchor bars 51,52 of an otherwise conventional infant carrier 53, the anchor bars extending between front and rear side flanges 54 and being retained by end fittings 55. The base humps are contoured to be received between the side flanges.

Internally and riveted 21 at the flat 10, the base includes a reinforcing frame 22 of steel tube, bent to U-shape, the junction 23 of its long limbs 24 being at the front of the base. Connected to the rear, distal ends 25 of the long limbs, via bearing mouldings 26 and bolted on 27 encircling steel straps 28 is a steel cross tube 29. The straps have slots 30 in which engage roll pins 31 pressed into the cross tube. The latter is thus located longitudinally whilst free to rotate by a half turn.

Welded to the terminal ends 32 of the cross tube are inner casings 33 of ISOFIX latches 34. In so far as these are conventional in themselves, they will not be described in further detail.

At the emergence of the cross tube from the base mouldings 2,3 the cross tube carries bearings 35 for steel straps 36 riveted to a steel tube hoop 37 forming an anti-rebound member 38. This has moulded, anti-rotation stops 39 riveted to it, the stops being shaped complementarily to the rear humps 9. The hoop 37 is partially filled in with a clipped-on thermo-forming 18.

The upper moulding has internal ribs 40, which define a central slot for a release member 41 formed as a injection moulding. This has two cross slots 42 for pivot pins 43 extending through the limbs 24 of the U-frame 22. The pins are located longitudinally by internal ribs 44 on the lower moulding and provide pivot points for hooks 45 at the recesses 11 for the anchor bars 51,52 of the infant carrier 53. The release member 41 carries at cross-bores 46 for upper pins 47, passing through the hooks 45 and held on by spring clips 48, whereby longitudinal movement of the release member is translated into rotation of the hooks through openings 49 in the upper moulding at the recesses 11. The hooks are guided laterally by further internal ribs 401.

At the front of the upper moulding in another opening 60, a release button 61 is provided. It is slidably carried on the release member 41 and co-operates with an inter-lock 62 via a pivot and a spring, neither of these being shown. The interlock has an ear 65 extending through an opening 66 in the upper moulding between the front humps and in line with recesses 11 in the front humps. The arrangement is such that the ear rises in front of the anchor bar 51 and it and the release member 41 are prevented from moving back under inertia in an accident. Normally the release member is biased forwards by a spring 67 carried at its rear end and reacting on a rib 68 on the lower moulding.

Below the release button, the front of the lower moulding has a formation 71 for a pivotal connection of a foot prop 72. In order to allow the prop to stow with it foot 73 per se clipped to the lower moulding by a clip 74 at an aperture 75, the pivotal connection is below the flat under-surface 6 of the lower moulding. The connection is comprised of a pair of depending tabs 76 welded to the U frame and carrying a pivot pin 77. The pin passes through an outer telescopic metal tube 78 of the prop. This carries a welded on U 79 to which is clipped a rocker 80. This is biased by a spring (not shown) to cause a peg 82 carried on its lower leg to engage through a hole in the outer tube in a selected one of a series of holes 83 in an inner tube 84. To keep the tubes from rattling and to keep the holes 83 at the correct rotary position, a moulded liner 85 extends between the tubes. It is located by the pin 77 passing through it. It has a longitudinal slot 87, in which a roll pin 871 pressed into the inner tube engages. The foot prop is stopped from pivoting forwards beyond a right angle to the underside of the base by abutment of the top end of the outer tube, above the pivot, with a web 88 between the tabs 76. It is loosely held in this position by resilient detents 89 in the lower moulding at the edge of the an aperture 90 in the formation 71.

For stowage, the foot prop 72 is clipped up under the base, the anti-rebound member 38 is folded against the prop and the ISOFIX latches 34 are pivoted in towards the front of the base.

For use, the ISOFIX latches are turned backwards, the anti-rebound member is swung around from beneath to above the base and the foot prop is swung forwards. The ISOFIX latches are engaged on loops at an adult seat and the foot prop is extended down to abut the floor. It is adjusted in length so that it rather than the front of the adult seat cushion supports the front of the base. To fit the infant carrier, its anchor bars 51,52 are engaged in the recesses 11 and the infant carrier is pushed down to push the hooks 45 away. Once the bars have passed them, they hook over the top of the bars. For removal of the infant carrier alone again, the release button is pressed in withdrawing the hooks, which allow the infant carrier to be lifted out.

In the event of a frontal accident, the centre of gravity of the child, infant carrier and base is appreciably above the ISOFIX loops and these tend to rotate as a unit about the loops. This rotation is resisted by the prop abutting the floor of the car. On rebound due to resilience, the base can rotate by a restricted amount only before the anti-rebound member 38 is pressed into the adult seat back and the rotation of the base is restricted by the stops 39. Thus the infant carrier is stopped from flipping back into the seat back. It is on rebound that inertia of the release member 41 could cause it to release the infant carrier. This is prevented the interlock 62.

Whilst the embodiment above has been described in connection with a Group 0+ rear-facing infant carrier, it is also suitable for other safety seats such as a forwards-facing or rear-facing Group 1 child safety seat.

It should be noted that the mouldings referred to in this description are mouldings of plastics materials, conveniently of polypropylene.

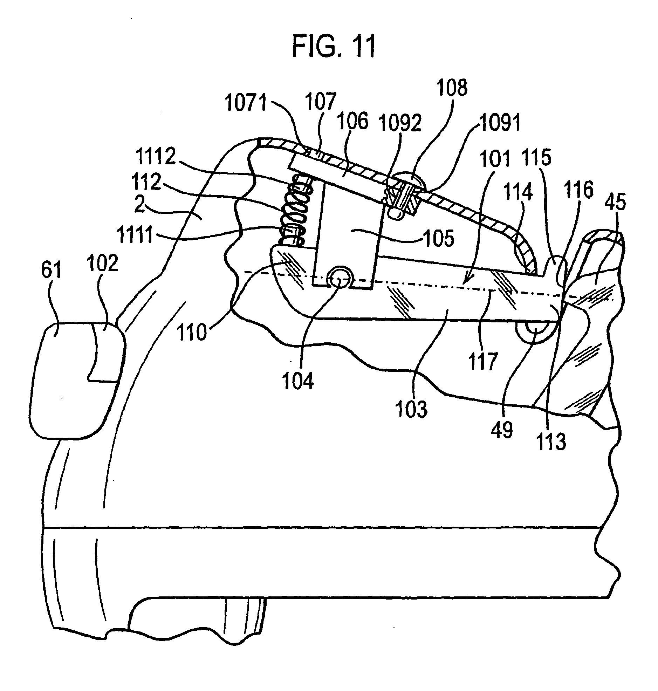

The invention is not intended to be restricted to the details of the above described embodiment, which can be varied for instance as shown in Figure 11 by inclusion of a retainer 101 for the hooks 45 in their disengaged position without an infant carrier engaged on the base. The button 60 has an indicator for indicating that the button is in its position corresponding to the hooks being in their engagement position, the indicator being a green mark 102 on a portion of the button that extends out of the upper moulding 2 when the hooks are engaged. The retainer holds the hooks back and the button in when there is no infant carrier. As shown, the retainer is an arm 103 pivoted 104 on a moulding 105. The latter has a foot 106 with a spigot 107 engaging in one aperture 1071 in the upper moulding and with a rivet 108 securing the foot at opposite apertures 1091,1092 in these components. The moulding is sized such that the pivot 104 is directly in front of the hook 45, in the line of its action towards its engaged position.

Both the foot 106 and an extension 110 of the arm on the side thereof remote from the hook 45 have spigots 1111,1112 for locating a spring 112, which urges the hook abutting end 113 of the arm upwards into the path of the hook. Movement of the arm in this direction is limited by abutment with an edge 114 of the opening 49 for the hook in the upper moulding. To ensure that a portion of the arm extends far enough into the path of the bar 51 for proper operation, the distal end of the arm has an upstand 115. In the quiescent state of the device, the arm holds the hook back from the opening and the green mark 102 is not visible.

As the infant carrier is fitted, the bar 51 abuts the upstand 115 and depresses the arm 103 compressing the spring 112. The hook 45 is free to move forwards and the bar is engaged. The button moves out and the green mark is exposed to indicate that the infant carrier is properly engaged. On removal of the infant carrier, by depression of the button, the arm 103 springs in front of the hook 45 as the bar 51 is lifted with the infant carrier, the button still being depressed. Release of the button brings the hook into abutment with the arm, whereby the button does not spring out to show the green mark 102. The hook is sprung 67 but does not displace the arm, since the latter is in compression with its distal end 116 square to the line of action 117 of the hook on it, whereby it does not rotate about the pivot under action of the spring 67.

## Claims

1. A base (1) for a child safety support (53) for use in a vehicle with an adult seat equipped with ISOFIX loops, the base (1) comprising:
a body (2, 3, 22) configured for positioning on the cushion of an adult seat;
a pair of ISOFIX latches (34) attached to the rear of the body (2, 3, 22);
a foot prop (72) attached at or near the front of the body (2, 3, 22) for extending past the front edge of the cushion of the adult seat and for abutting the floor of the vehicle;
a safety support engagement mechanism (11, 45) for engaging a child safety support (53) to the body (2, 3, 22);
an anti-rebound member (38) provided at the latch end of the body (2, 3, 22) for abutting against the back of the adult seat to resist rebound rotation of the body (2, 3, 22) about the ISOFIX latches (34) in the event of an accident; wherein
the body (2, 3, 22) includes a reinforcement (22), connecting the ISOFIX latches (34) to the safety support engagement mechanism (11, 45), the ISOFIX latches (34) being pivotaly attached to the reinforcement (22).

2. A base according to claim 1, wherein the body (2, 3, 22) is of unitary and/or moulded construction with sufficient inherent strength to resist accident loads.

3. A base according to claim 1 or 2, wherein the reinforcement (22) is in the form of a U-shaped metal frame having the ISOFIX latches (34) at the distal ends of its limbs (24).

4. A base according to claim 3, wherein the ISOFIX latches (34) and limbs (24) are connected directly.

5. A base according to claim 3, wherein the ISOFIX latches (34) and limbs (24) are connected via a cross-member (29) interconnecting the distal ends, and having the ISOFIX latches (34) at the terminal ends of the cross-member (29).

6. A base according to claim 5, wherein the ISOFIX latches (34) are pivoted via the cross-member (29).

7. A base according to claims 5 or 6, wherein the anti-rebound member (38) is attached to the cross-member (29).

8. A base according to claim 7, wherein the anti-rebound member (38) is pivotal about the cross-member (29) and is provided with abutments (39) with the top surface (7) of the base (1) to limit the movement of the member (38) and the top surface (7) towards each other in a rebound.

9. A base according to any preceding claims, wherein the foot prop (72) is attached at the front of the body (2, 3, 22).

10. A base according to any one of claims 3 to 9, wherein the safety support engagement mechanism (11, 45) is configured as two pairs of hooks (45) pivoted to the U-frame (22) - two at each long limb (24) - and ganged together for resilient urging to their engaged position.

11. A base according to claim 10, wherein a central longitudinal member (41) is provided for the ganged connection.

12. A base according to claim 11, wherein the ganged connection is provided with an inertia interlock (62), releasable on application of manual force to release the engagement means (61).

13. A base according to any preceding claim, further comprising:
a button (61) moveable from an engaged position to a release position for releasing the child safety support from the safety support engagement mechanism (11, 45), the button (61) being provided with indicator (102) for indicating that the button (61) is in an engaged position corresponding to the hooks (45) being in their engagement position.

14. A base according to claim 13, further comprising a retainer (101) for retaining the hooks (45) in a disengaged position and the button (61) in a release position without the indicator (102) indicating engagement when no child safety support (53) is engaged on the base (1).

15. A base according to claim 13 as appendant to claims 12 or 13, wherein the button (61) is provided at the end of the central longitudinal member (41) opposite from the ISOFIX latches (34).

16. A base according to claim 14, wherein:
the retainer (101) is a pivoted arm (103) arranged to abut one of the hooks (45) in its disengaged and extend from a point of abutment (113) in the direction of the line of movement of the hook (45) towards its engaged position, a pivot (104) for the arm (103) being provided remote from the point of abutment (113) in the direction of the arm's extension, whereby the resilient urging of the hook (45) to its engaged position does not deflect the arm (103) and a spring (112) is provided for urging the arm (103) to its hook retaining position, when displaced therefrom on engagement of a child safety support (53) on the base (1).

17. A base according to claim 16, wherein the pivot (104) is provided on a member (105) attached to the inside of an upper skin of the body (2, 3, 22), the member (105) and an extension of the arm (103) from the pivot (104) remote from the hook (45) being provided with spring location points (1111, 1112).

18. A base according to any preceding claims, comprising mouldings (9) formed from plastics materials.

19. A base according to any preceding claim, wherein said child safety support (53) is a Group 0+ rear-facing infant carrier or forward-facing or a rear-facing Group 1 child safety seat.

20. A combination of a base according to any one of claims 1 to 19 and an infant carrier or a child safety seat.

## Patentansprüche

1. Basis (1) für eine Kindersicherungsvorrichtung (53) zur Verwendung in einem Fahrzeug bei einem Erwachsenensitz, der mit ISOFIX-Schlaufen ausgerüstet ist, wobei die Basis (1) aufweist:
einen Körper (2, 3, 22), der zum Positionieren auf der Polsterung eines Erwachsenensitzes konfiguriert ist;
ein Paar von ISOFIX-Rasten (34), die an der Rückseite des Körpers (2, 3, 22) befestigt sind;
ein Stützbein (72), das an oder nahe der Vorderseite des Körpers (2, 3, 22) befestigt ist und sich an der Vorderkante der Polsterung des Erwachsenensitzes vorbei erstreckt und am Fahrzeugboden aufsteht;
einen Sicherungsvorrichtungs-Eingriffsmechanismus (11, 45) zum Befestigen einer Kindersicherungsvorrichtung (53) an dem Körper (2, 3, 22);
ein Anti-Rückprall-Element (38), das am Rastenende des Körpers (2, 3, 22) vorgesehen ist, um an der Rückseite des Erwachsenensitzes anzuliegen, um eine Rückpralldrehung des Körpers (2, 3, 22) um die ISOFIX-Rasten (34) im Fall eines Unfalls zu verhindern; wobei
der Körper (2, 3, 22) eine Verstärkung (22) aufweist, die die ISOFIX-Rasten (34) mit dem Sicherungsvorrichtungs-Eingriffsmechanismus (11, 45) verbindet, wobei die ISOFIX-Rasten (34) schwenkbar an der Verstärkung (22) befestigt sind.

2. Basis nach Anspruch 1, wobei der Körper (2, 3, 22) einen einheitlichen und/oder gegossenen Aufbau mit ausreichender inhärenter Festigkeit hat, um Unfallbelastungen zu widerstehen.

3. Basis nach Anspruch 1 oder 2, wobei die Verstärkung (22) in Form eines U-förmigen Metallrahmens vorliegt, wobei die ISOFIX-Rasten (34) an den distalen Enden seiner Schenkel angeordnet sind.

4. Basis nach Anspruch 3, wobei die ISOFIX-Rasten (34) und die Schenkel (24) direkt verbunden sind.

5. Basis nach Anspruch 3, wobei die ISOFIX-Rasten (34) und die Schenkel (24) über eine Querstrebe (29) verbunden sind, die die distalen Enden miteinander verbindet, und wobei die ISOFIX-Rasten (34) an den Endstellen der Querstrebe (29) angeordnet sind.

6. Basis nach Anspruch 5, wobei die ISOFIX-Rasten (34) über die Querstrebe (29) schwenkbar sind.

7. Basis nach Anspruch 5 oder 6, wobei das Anti-Rückprall-Element (38) an der Querstrebe (29) befestigt ist.

8. Basis nach Anspruch 7, wobei das Anti-Rückprall-Element (38) um die Querstrebe (29) herum schwenkbar ist und mit Widerlagern (39) zur oberen Fläche (7) der Basis (1) versehen ist, um die Bewegung des Elements (38) und der oberen Fläche (7) in Richtung zueinander bei einem Rückprall zu begrenzen.

9. Basis nach einem der vorhergehenden Ansprüche, wobei das Stützbein (72) an der Vorderseite des Körpers (2, 3, 22) befestigt ist.

10. Basis nach einem der Ansprüche 3 bis 9, wobei der Sicherungsvorrichtungs-Eingriffsmechanismus (11, 45) als zwei Paare von Haken (45) konfiguriert ist, die zum U-Rahmen (22) schwenkbar sind - zwei an jedem langen Schenkel (24) - und mechanisch gekuppelt sind, um sie elastisch in ihre Eingriffsposition zu drängen.

11. Basis nach Anspruch 10, wobei ein mittiges Längselement (41) für die mechanisch gekuppelte Verbindung vorgesehen ist.

12. Basis nach Anspruch 11, wobei die mechanisch gekuppelte Verbindung mit einer Trägheitsarretierung (62) versehen ist, die bei Aufbringen einer manuellen Kraft lösbar ist, um das Eingriffsmittel (61) zu lösen.

13. Basis nach einem der vorhergehenden Ansprüche, die des Weiteren aufweist:
einen Knopf (61), der von einer Eingriffsposition in eine gelöste Position bewegbar ist, um die Kindersicherungsvorrichtung von dem Sicherungsvorrichtungs-Eingriffsmechanismus (11, 45) zu lösen, wobei der Knopf (61) mit einer Anzeige (102) versehen ist, um anzuzeigen, dass sich der Knopf (61) in einer Eingriffsposition befindet, die den Haken (45) in der Eingriffsposition entspricht.

14. Basis nach Anspruch 13, die des Weiteren einen Halter (101) aufweist zum Halten der Haken (45) in einer gelösten Position und des Knopfs (61) in einer gelösten Position, ohne dass die Anzeige (102) einen Eingriff anzeigt, wenn auf der Basis (1) keine Kindersicherungsvorrichtung (53) in Eingriff ist.

15. Basis nach Anspruch 13, wenn auf Anspruch 11 oder 12 bezogen, wobei der Knopf (61) am Ende des mittigen Längselements (41 ) gegenüber den ISOFIX-Rasten (34) vorgesehen ist.

16. Basis nach Anspruch 14, wobei:
der Halter (101) ein schwenkbarer Arm (103) ist, der so angeordnet ist, dass er an einen der Haken (45) in der gelösten Position anschlägt und sich von einem Anschlagspunkt (113) in Richtung der Bewegungslinie des Hakens (45) in die Eingriffsposition erstreckt, wobei ein Gelenk (104) für den Arm (103) fern vom Anschlagspunkt (113) in Richtung der Erstreckung des Arms vorgesehen ist, wobei das elastische Drängen des Hakens (45) in die Eingriffsposition den Arm (103) nicht ablenkt, und wobei eine Feder (112) vorgesehen ist, um den Arm (103) in die Hakenhalteposition zu drängen, wenn er bei Eingriff einer Kindersicherungsvorrichtung (53) auf der Basis (1) davon verschoben ist.

17. Basis nach Anspruch 16, wobei das Gelenk (104) an einem Element (105) vorgesehen ist, das an der Innenseite einer Oberhaut des Körpers (2, 3, 22) befestigt ist, wobei das Element (105) und eine Erstreckung des Arms (103) vom Gelenk (104) fern vom Haken (45) mit Federaufnahmepunkten (1111, 1112) versehen sind.

18. Basis nach einem der vorhergehenden Ansprüche, die Formteile (9) aufweist, die aus Kunststoffmaterialien hergestellt sind.

19. Basis nach einem der vorhergehenden Ansprüche, wobei die Kindersicherungsvorrichtung (53) eine rückwärts gerichtete Babyschale der Gruppe 0+ oder ein vorwärts gerichteter oder rückwärts gerichteter Kindersitz der Gruppe 1 ist.

20. Kombination aus einer Basis nach einem der Ansprüche 1 bis 19 und einer Babyschale oder einem Kindersitz.

## Revendications

1. Base (1) pour un support de sécurité pour enfant (53) destinée à une utilisation dans un véhicule avec un siège pour adulte équipé avec des anneaux ISOFIX, la base (1) comprenant :
un corps (2, 3, 22) configuré pour un positionnement sur l'assise du siège pour adulte ;
une paire de pinces (34) ISOFIX fixées à l'arrière du corps (2, 3, 22) ;
un pied support (72) fixé au niveau ou à proximité de l'avant du corps (2, 3, 22) pour s'étendre au-delà du bord avant de l'assise du siège pour adulte et pour venir buter sur le plancher du véhicule ;
un mécanisme d'engagement de support de sécurité (11, 45) pour engager un support de sécurité pour enfant (53) avec le corps (2, 3, 22) ;
un élément anti-rebond (38) prévu à l'extrémité de pinces du corps (2, 3, 22) pour venir buter contre le dossier du siège pour adulte pour résister à une rotation par rebond du corps (2, 3, 22) autour des pinces (34) ISOFIX dans le cas d'un accident ; dans laquelle
le corps (2, 3, 22) inclut un renfort (22), connectant les pinces (34) ISOFIX au mécanisme d'engagement de support de sécurité (11, 45), les pinces (34) ISOFIX étant fixées de façon pivotante au renfort (22).

2. Base selon la revendication 1, dans laquelle le corps (2, 3, 22) est de construction unitaire et/ou moulée avec une résistance inhérente suffisante pour résister à des charges dues à un accident.

3. Base selon la revendication 1 ou 2, dans laquelle le renfort (22) est sous la forme d'un cadre métallique en forme de U ayant les pinces (34) ISOFIX aux extrémités distales de ses bras (24).

4. Base selon la revendication 3, dans laquelle les pinces (34) ISOFIX et les bras (24) sont connectés directement.

5. Base selon la revendication 3, dans laquelle les pinces (34) ISOFIX et les bras (24) sont connectés par l'intermédiaire d'une traverse (29) interconnectant les extrémités distales, et ayant les pinces (34) ISOFIX aux extrémités terminales de la traverse (29).

6. Base selon la revendication 5, dans laquelle les pinces (34) ISOFIX sont fait pivoter par l'intermédiaire de la traverse (29).

7. Base selon la revendication 5 ou 6, dans laquelle l'élément anti-rebond (38) est fixé à la traverse (29).

8. Base selon la revendication 7, dans laquelle l'élément anti-rebond (38) est pivotant autour de la traverse (29) et est prévu avec des butées (39) avec la surface supérieure (7) de la base (1) pour limiter le mouvement de l'élément (38) et de la surface supérieure (7) l'un vers l'autre dans un rebond.

9. Base selon l'une quelconque des revendications précédentes, dans laquelle le pied support (72) est fixé sur l'avant du corps (2, 3, 22).

10. Base selon l'une quelconque des revendications 3 à 9, dans laquelle le mécanisme d'engagement de support de sécurité (11, 45) est configuré comme deux paires de crochets (45) fait pivoter par rapport au cadre en U (22) - deux sur chaque bras long (24) - et couplés ensemble pour les pousser de façon résiliente dans leur position engagée.

11. Base selon la revendication 10, dans laquelle un élément longitudinal central (41) est prévu pour la connexion couplée.

12. Base selon la revendication 11, dans laquelle la connexion couplée est prévue avec un interverrouillage à inertie (62), libérable par application d'une force manuelle pour libérer le moyen d'engagement (61).

13. Base selon une quelconque revendication précédente, comprenant en outre :
un bouton (61) mobile d'une position engagée jusqu'à une position de libération pour libérer le support de sécurité pour enfant du mécanisme d'engagement de support de sécurité (11, 45), le bouton (61) étant prévu avec un indicateur (102) pour indiquer que le bouton (61) est dans une position engagée correspondant aux crochets (45) étant dans leur position d'engagement.

14. Base selon la revendication 13, comprenant en outre un élément de maintien (101) pour maintenir les crochets (45) dans une position désengagée et le bouton (61) dans une position de libération sans que l'indicateur (102) n'indique un engagement lorsqu'aucun support de sécurité pour enfant (53) n'est engagé sur la base (1).

15. Base selon la revendication 13 lorsqu'elle dépend de la revendication 12 ou 13, dans laquelle le bouton (61) est prévu à l'extrémité de l'élément longitudinal central (41) à l'opposé des pinces (34) ISOFIX.

16. Base selon la revendication 14, dans laquelle :
l'élément de maintien (101) est un bras (103) fait pivoter agencé de manière à venir buter sur un des crochets (45) dans sa position désengagée et à s'étendre d'un point de butée (113) dans le sens de la ligne de mouvement du crochet (45) vers sa position engagée, un pivot (104) pour le bras (103) étant prévu distant du point de butée (113) dans le sens d'extension du bras, d'où il résulte que la poussée résiliente du crochet (45) jusque dans sa position engagée ne fait pas dévier le bras (103) et un ressort (112) est prévu pour pousser le bras (103) jusqu'à sa position de maintien de crochet, lorsqu'il est déplacé de celle-ci lors de l'engagement d'un support de sécurité pour enfant (53) sur la base (1).

17. Base selon la revendication 16, dans laquelle le pivot (104) est prévu sur un élément (105) fixé sur l'intérieur d'une peau supérieure du corps (2, 3, 22), l'élément (105) et une extension du bras (103) à partir du pivot (104) distant du crochet (45) étant prévus avec des points de positionnement de ressorts (1111, 1112).

18. Base selon l'une quelconque des revendications précédentes, comprenant des moulages (9) formés de matériaux plastiques.

19. Base selon une quelconque revendication précédente, dans laquelle ledit support de sécurité pour enfant (53) est une coque pour nourrisson dos à la route du Groupe 0+ ou un siège de sécurité pour enfant du Groupe 1 face à la route ou dos à la route.

20. Combinaison d'une base selon l'une quelconque des revendications 1 à 19 et d'une coque pour nourrisson ou d'un siège de sécurité pour enfant.
